# EUROPEAN PATENT SPECIFICATION

(11) **EP 3 409 464 B1**
(45) Date of publication and mention of the grant of the patent: **08.07.2020**
(21) Application number: 17173853.7
(22) Date of filing: 31.05.2017
(51) Int. Cl.: B32B 15/085, B32B 15/20, B32B 27/08, B32B 27/10, B32B 27/30, B32B 27/32, B32B 27/34, B32B 1/02, B32B 3/26, B65D 5/56, B65D 75/48

(54) **LAMINATED PACKAGING MATERIAL AND OPENING MEMBRANE MATERIAL, PACKAGING CONTAINERS MANUFACTURED THEREFROM AND METHOD FOR MANUFACTURING THE LAMINATED MATERIAL**
LAMINIERTES VERPACKUNGSMATERIAL UND ÖFFNENDES MEMBRANMATERIAL, DARAUS HERGESTELLTE VERPACKUNGSBEHÄLTER UND VERFAHREN ZUR HERSTELLUNG DES LAMINATMATERIALS
MATÉRIAU D'EMBALLAGE STRATIFIÉ ET MATÉRIAU DE MEMBRANE D'OUVERTURE, CONTENEURS D'EMBALLAGE AINSI FABRIQUÉS ET PROCÉDÉ DE FABRICATION DU MATÉRIAU STRATIFIÉ

(43) Date of publication of application: 05.12.2018
(73) Proprietor: Tetra Laval Holdings & Finance S.A., 1009 Pully (CH)
(72) Inventor: TOFT, Nils, 224 72 Lund (SE)
(74) Representative: Tetra Pak - Patent Attorneys SE

(56) References cited:
- WO-A1-2017/089504
- WO-A1-2017/089508
- US-A1- 2005 175 800
- US-A1- 2012 103 856

## Description

### Technical field

The present invention relates to a laminated packaging material comprising a bulk layer of paper or carton or other cellulose-based material with through-going holes, openings or slits, a layer of thermoplastics applied onto one outer side of the bulk layer, an aluminium foil applied onto the other, inner, side of the bulk layer, extending throughout the laminated material, and bonded to the bulk layer by at least one intermediate layer of thermoplastics, the two layers of thermoplastics both extending throughout the laminated material and being sealed to each other within the regions of the holes to form a membrane of aluminium foil and thermoplastics, and one or more layers of thermoplastics applied onto the opposite, inner, side of the aluminium foil.

Furthermore, the invention relates to packaging containers comprising the laminated packaging material or being made of the laminated packaging material, as well as to a method for manufacturing of the laminated material.

### Background

Packaging containers of the single use disposable type for liquid foods are often produced from a packaging laminate based on paperboard or carton. One such commonly occurring packaging container is marketed under the trademark Tetra Brik® Aseptic and is principally employed for aseptic packaging of liquid foods such as milk, fruit juices etc, sold for long term ambient storage. The packaging material in this known packaging container is typically a laminate comprising a bulk layer of paper or paperboard and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic or cuboid, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik® -type packaging method is, as stated above, the possibility of continuous high-speed packaging, which has considerable impact on cost efficiency.

Typically many thousands of packages may be prepared per hour. For example the Tetra Pak ® A3/speed machine may manufacture about 15 000 packages per hour of family-size packaging containers of 0.9 liters and above, and about 24 000 packaging containers per hour of portion packages.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

The known packaging laminate is conventionally produced from a web of paper or paperboard which is unwound from a storage reel, while at the same time a web of aluminium foil is unwound from a corresponding storage reel. The two unwound webs are brought together with each other and are both guided through the nip between two adjacent rotatable cylinders, while at the same time a bonding layer of a laminating material, usually low-density polyethylene (LDPE), is extruded into a molten polymer film or polymer curtain, which is thus applied between the webs to permanently bind the aluminium foil web to the paper or paperboard web. The paper or paperboard web is thereafter provided on both sides with liquid-tight coatings of polyethylene, normally low-density polyethylene (LDPE), and is then wound up on finished packaging reels for onward transport and handling.

From the consumer's point of view, it is desirable that the packaging container be easy to handle and easy to open when it is time to empty the package of its contents, and in order to satisfy this need, the packaging container is often provided with some type of opening arrangement.

A commonly occurring opening arrangement in such packaging containers includes a hole punched or cut in the bulk paperboard layer of the package wall, the hole being covered on the inside and outside of the package wall, by the respective outer layers of thermoplastics of the packaging wall which are sealed to one another in the region of the opening contour of the through-going hole, thus forming a membrane of the layers not being paperboard. An opening device, usually of moulded plastics, having a pouring spout and a screw top for resealing, may be applied onto the region of and around the hole, which opening device is designed to penetrate or remove the membrane within the hole region by a pushing-down or screwing-down movement or, alternatively, to remove the membrane by a screwing- and/ or pulling-up movement of the opening device. The inside of a screwable part of the opening device may for example be adhered to the membrane of the hole, in such a way that when it is screwed upwards away from the packaging wall, the membrane is lifted along with the screwable part and torn away from the edges of the hole, leaving a practically clean-cut hole for pouring the filled contents out of the package.

Alternatively, the screwable part may comprise cutting mechanisms, such as cutting teeth or similar, that penetrate and subsequently cut the membrane open while twisting the screwable part.

One type of opening arrangement is directly injection moulded onto the laminated packaging material, onto the area of the hole or slit in the bulk paperboard layer. Such opening arrangements may then comprise moulded parts on both sides of the laminated packaging material, and may include parts that interact with and tear, cut or break the membrane of the hole or slit open.

A precondition for an opening arrangement of any of the above types to function efficiently and expediently is that, there is adequate adhesion between the different layers of the membrane such that it does not delaminate when forces of screwing with pushing-down and/ or pulling-up and/or cutting forces, are applied to the membrane during the opening operation.

It may, however, be difficult to obtain adequate adhesion within the regions of the holes, because of the difference in total laminate thickness between the regions of the holes and the regions outside of the holes when laminating together the aluminium foil and thermoplastic layers of the membrane. When passing a web of the laminated layers through a press nip in a lamination station, the layers are pressed to adhere to each other by means of a pressure roller and a cooled cylinder. In the regions defined by the hole or the slit, the press nip must press the aluminium foil and the polymer layers together sufficiently for achieving the requisite adherence.

Although good adhesion and lamination within the membrane may have been achieved in the process of manufacturing the laminated material, infavourable conditions in the subsequent handling of the laminated material may cause troubles in the area of the holes and the membranes.

Unfavourable conditions may arise through the exposure to heat and mechanical forces in the sterilizing, forming and filling operations in the filling machine, whereby the laminated packaging material with holes and laminated thin layer membranes travel through the operations at very high speed. For example, during the sterilization operation the packaging material is immersed in a hot peroxide bath at a temperature around 80 °C, for a few seconds, and then dried, whereby the polymers of the laminated layers in the membrane may expand or deform due to loss of tensile stiffness in the polymer layers, such that the aluminium foil layer is forced to yield or even crack. This is further emphasized when the membranes are subsequently or simultaneously subjected to mechanical forces by feeding rollers, sudden pressure changes from air turbulence or from the liquid product at filing of the packaging material tube, or at folding of the packages, or from other parts of the filling machines. Thus, eventually in the filled packaging containers, there may be bad adhesion in the laminated hole membranes, despite precautions and care taken during the manufacturing of the laminated packaging material.

Thus, the aluminium foil, which is relatively thin, may be damaged and fractured, which may lead to the gas-tightness of the packaging container being impaired and thereby also the colour, taste and nutritional values of the packaged food product.

Furthermore, lower adhesion due to delamination of the membrane laminate layers, from the thermal and mechanical load during filling machine operations, may cause opening difficulties when tearing off or penetrating of the membrane. There may be formation of frayed edges, and it may be diffcult to open the package to provide a nice, clean opening and pouring hole.

The published patent application No. US2005/175800 discloses a packaging laminate comprising a core layer of paper or carton with through-going holes, openings or slits, comprising in the following order a heat sealable thermoplastics, a core layer, an intermediate bonding layer of thermoplastics, in particular a polyethylene, such as LDPE, a gas barrier layer of an aluminium foil, and a thermoplastic structure of three polymer part-layers foming the innermost heat-sealable layer.

The published patent application No. US2012/103856 discloses a packaging laminate comprising an outer layer of a heat sealable thermoplastic material, a core layer of paper or carton with through-going holes, openings or slits, an LDPE intermediate bonding layer, a stabilizing paper layer, an LDPE intermediate bonding layer, a gas barrier layer of an aluminium foil and an innermost heat sealable thermoplastic layer.

### Summary

It is accordingly, a general object of the present invention to provide an improved laminated packaging material, and packages made therefrom, mitigating the drawbacks of the previous art, as described above.

It is thus an object to realise a new laminated packaging material providing improved package integrity in the areas of the laminated holes, openings or slits, in packaging containers produced from the material, and filled with liquid food.

It is also an object of the invention to provide a laminated packaging material imparting improved oxygen barrier properties to aseptic packaging containers produced from the material, and filled with liquid food.

It is a further object of the invention to provide a laminated packaging material providing improved openability of packaging containers filled with liquid food and produced from the material..

Some or all of these objects are attainable according to the present invention by the laminated packaging material, the method of manufacturing the laminated packaging material as well as the packaging container made therefrom, as defined hereinafter and in the appended claims.

According to a first aspect of the invention, there is thus provided a laminated cellulose-based, liquid food packaging material, comprising a bulk material layer with through-going holes, openings or slits (20), each defining an opening area, further comprising an outermost, transparent and protective thermoplastic polymer layer arranged on the outside of the bulk material layer, i.e. on the side to be directed outwards from a packaging container made from the laminated material, and an innermost, heat sealable and liquid-tight thermoplastic polymer layer, which is intended to be in direct contact with the packed food product, an aluminium metal foil for providing gas barrier properties, which is laminated between the bulk material layer and the innermost thermoplastic polymer layer, wherein a thermo-mechanically stable polymer layer, of a polymer composition having a melting point higher than 150°C, and comprising at least 70 wt-% of a polymer selected from the group consisting of ethylene vinyl alcohol copolymer (EVOH) and polyamide (PA) resulting from polymerization of monomers selected from the group consisting of Caprolactam, Laurolactam, Undecanolactam, Adipic Acid, Azelaic Acid, Sebacic Acid, Dodecanedioic Acid, Terephatalic Acid, Isophathalic Acid, Butanediamine, Hexamethylene diamine, Trimethylhexamethylene diamine and Metaxyxylene diamine (MXDA) monomer, or of a blend of two or more polyamides obtained from different such monomer combinations, the amount of MXDA monomer included in the polyamide being in total 80 mol% or less, is laminated between the aluminium metal foil and the bulk material layer together with at least one intermediate bonding layer of a thermoplastic polymer, and wherein the aluminium metal foil, the inner- and outermost thermoplastic polymer layers and the thermo-mechanically stable polymer layer, all extend throughout the areas of the holes, openings or slits of the bulk material layer, such that they are laminated and sealed to each other to form a laminated opening membrane material, not containing the bulk material layer, within the opening areas.

By incorporating and arranging a thermo-mechanically stable polymer layer into the laminated structure, adjacent the aluminium metal foil, the aluminium foil will be better supported in the areas where the bulk material layer has been cut out and removed from the laminate. The better support to the aluminium foil of the laminated hole may improve the package integrity properties and the oxygen barrier properties around the opening areas, or alternatively, the thickness of the aluminium metal foil may be downgauged without impairing the barrier and integrity properties further. The thermo-mechanically stable polymer layer does not have to be thick or add much costs, if it is chosen from the group of polymers selected from polyamide as a base for the polymer composition. Moreover, such a thermo-mechanically stable polymer layer would also be suitable for conventional melt extrusion laminating methods in the manufacturing of the laminate packaging material.

Earlier developments concerning handling the instability of the aluminium foil in the opening membrane, resulted in the use of a grooved lamination roller. Circumferential grooves of suitable dimensions in the rubber surface of the lamination press roller help to shape the polymer layers and the aluminium foil during extrusion coating and lamination, such that the mechanical forces and the heat acting on the opening membrane can be better controlled. With the present invention, however, such a lamination roller would not be needed anymore.

In a second aspect of the invention, a liquid food packaging container comprising the laminated packaging material of the invention is provided. The packaging container may be made from the laminated packaging material entirely, by fold-forming a sheet- or web-shaped blank into a cuboid, another fold-shaped package or merely into a pouch package.

In a third aspect of the invention, there is provided a laminated opening membrane material, covering an opening area of a laminated packaging material, the opening area being defined by a through-going hole, opening or slit in a bulk material layer comprised in the laminated packaging material, the laminated membrane material comprising the following laminated layers from the outside of the laminated opening membrane material to the inside, i.e. corresponding to the outside and inside of a package comprising the laminated opening membrane material, an outermost, transparent and protective thermoplastic polymer layer, at least one intermediate bonding layer of a thermoplastic polymer, a thermo-mechanically stable layer, of a polymer composition having a melting point higher than 150°C, comprising at least 70 wt-% of a polymer selected from the group consisting of ethylene vinyl alcohol copolymer (EVOH) and polyamide (PA) resulting from polymerization of monomers selected from the group consisting of Caprolactam, Laurolactam, Undecanolactam, Adipic Acid, Azelaic Acid, Sebacic Acid, Dodecanedioic Acid, Terephatalic Acid, Isophathalic Acid, Butanediamine, Hexamethylene diamine, Trimethylhexamethylene diamine and Metaxyxylene diamine (MXDA) monomer, or of a blend of two or more polyamides obtained from different such monomer combinations, the amount of MXDA monomer included in the polyamide being in total 80 mol% or less, an aluminium metal foil, at least one adhesive polymer layer and an innermost, heat sealable and liquid-tight thermoplastic polymer layer.

In a fourth aspect of the invention, a method for manufacturing the laminated cellulose-based, liquid food packaging material as defined above, comprises the steps, in any order or in any combination, of
a) forwarding a first web of a bulk material layer having through-going holes, openings or slits, each defining an opening area, and a second web of an aluminium metal foil towards a lamination roller nip,
b) laminating the first and second webs to each other, by melt co-extruding a molten multilayer of at least one intermediate bonding layer of a thermoplastic polymer together with a thermo-mechanically stable polymer, between the web of the aluminium metal foil and the web of the bulk material layer, and then pressing the layers to adhere to each other in the lamination roller nip,
   the thermo-mechanically stable polymer layer, being a polymer composition having a melting point higher than 150°C, and comprising at least 70 wt-% of a polymer selected from the group consisting of ethylene vinyl alcohol copolymer (EVOH) and polyamide (PA) resulting from polymerization of monomers selected from the group consisting of Caprolactam, Laurolactam, Undecanolactam, Adipic Acid, Azelaic Acid, Sebacic Acid, Dodecanedioic Acid, Terephatalic Acid, Isophathalic Acid, Butanediamine, Hexamethylene diamine, Trimethylhexamethylene diamine and Metaxyxylene diamine (MXDA) monomer, or of a blend of two or more polyamides obtained from different such monomer combinations, the amount of MXDA monomer included in the polyamide being in total 80 mol% or less,
c) laminating an innermost heat sealable thermoplastic polymer layer on the inner side of the web of the aluminium metal foil, opposite the side of the bulk material layer, and
d) laminating an outermost thermoplastic polymer layer on the outer side of the web of the bulk material layer, opposite the side of the aluminium metal foil,
   thus laminating the aluminium metal foil, the inner- and outermost thermoplastic polymer layers and the thermo-mechanically stable polymer layer to each other within the areas of the through-going holes, openings or slits, to form a laminated opening membrane material, not containing the bulk material layer, within the opening areas.

The thermo-mechanically stable polymer layer is thus laminated into the laminated material structure by means of co-extrusion lamination. Thereby the thickness and amount of the thermo-mechanically stable polymer layer can be kept as low as possible for cost and efficiency reasons.

When the thermo-mechanically stable polymer layer is laminated into the laminated material structure by co-extrusion together with an intermediate bonding layer of thermoplastic polymer, the aluminium metal foil in the laminated membrane will be well supported and protected towards the outside of the packaging material and the outside of a packaging container formed therefrom.

### Detailed description

With the term "long-term storage" in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package durability, i.e. the resistance to leakage or breakage of a packaging container. In particular, it encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well - functioning and robust sealing operations in the filling machines, which in turn is ensured by adequately adapted heat-sealing properties of the laminated packaging material.

The term "liquid food" generally refers to food products having a flowing content of low or high viscosity, that optionally may contain pieces of food. Dairy and milk, soy, rice, grains and seed drinks, juice, nectar, still drinks, energy drinks, sport drinks, coffee or tea drinks, coconut water, tea drinks, wine, soups, crushed tomatoes, sauce (such as pasta sauce) and olive oil are some non-limiting example of food products contemplated.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties and dimensional stability.

A "spacer layer" is thus a layer that creates a distance or space between significantly thinner material layers in a sandwich construction, which have a higher Young's modulus and density, such as an oriented film, metal foil or a high-density, high-tensile stiffness paper layer, foil or film, arranged on each side of the spacer layer, i.e. stiffness- and stability-providing layers, so-called facing layers. The spacer layer may have a lower or reduced inherent bending stiffness and thus does not itself contribute much directly to the bending stiffness of a laminated packaging material. Indirectly, it may contribute very much, however, by the interaction with adjacent or laminated layers on both sides, some of the layers having a higher Young's modulus but a lower thickness in comparison to the spacer layer. In a sandwich construction, it is important that there is at least one such facing layer, or stiffness-enhancing layer on each side of the spacer layer. A "bulk layer" may thus comprise a "spacer layer" and a further combined layer within the bulk, but may also be the same as, i.e. identical to, a spacer layer.

The term "heat-sealing" refers to the process of welding one surface of a thermoplastic material to another thermoplastic surface. A heat-sealable material should, under the appropriate conditions such as applying sufficient heating and pressure, be able to generate a seal when pressed against and in contact with another suitable thermoplastic material. Suitable heating can be achieved by induction heating or ultrasonic heating or other conventional contact or convection heating means, e.g. hot air or impulse heating. Upon heating, the mobility of the polymer chains increase at the material surfaces intended for sealing to each other, such that the chains disentangle and move and re-entangle with polymer chains from the opposite sealing surface. Upon cooling there are created strong bonds of entangled polymer chains across the sealing interface, thus bonding the two material surfaces to each other. The heat sealing operation has to occur within parts of a second and the duration of the different phases, such as heating, partly melting, bonding and cooling, is counted in milliseconds, in packaging machines that produce thousands of packages per hour.

The term "inner" as defining a position in a laminated packaging material has the meaning "directed towards the inside of a packaging container formed from the packaging material", and the therm "outer" defines the "direction towards the outside of a packaging container formed from the packaging material".

"Innermost" means the layer that is in contact with the packed product in a packaging container formed from the packaging material.

"Outermost" means the layer that provides the outer, external surface of a packaging container formed from the packaging material.

Accordingly, there is a gas barrier material comprising an aluminium metal foil as well as a thermo-mechanically stable polymer layer, laminated between the bulk material layer and the innermost heat sealable and liquid tight thermoplastic polymer layer, the thermo-mechanically stable layer being of a polymer composition having a melting point higher than 150°C, comprising at least 70 wt-% of a polymer selected from the group consisting of ethylene vinyl alcohol copolymer (EVOH) and polyamide (PA) resulting from polymerization of monomers selected from the group consisting of Caprolactam, Laurolactam, Undecanolactam, Adipic Acid, Azelaic Acid, Sebacic Acid, Dodecanedioic Acid, Terephatalic Acid, Isophathalic Acid, Butanediamine, Hexamethylene diamine, Trimethylhexamethylene diamine and Metaxyxylene diamine (MXDA) monomer, or of a blend of two or more polyamides obtained from different such monomer combinations, the amount of MXDA monomer included in the polyamide being in total 80 mol% or less.

The monomer Metaxyxylene diamine (MXDA) may thus be included in the polyamide of the polymer composition at 30 mol% or less. In case of polymer compositions (comprising copolymers or blends of different polyamides) including also polyamide derived from MXDA moieties, the maximum ratio of MXDA towards the other monomers listed above should not exceed 80 mol%. Above this ratio, the polymer composition may obtain a too reduced elongation at break.

Particularly suitable polyamides are PA6, PA4,6 , PA6,6 , PA6-6,6, PA6,12, PA11, PA12, PA6-co-PA12, PA6I, PA6I,6T.

Preferably, the polymer composition comprises at least 80 wt%, such as at least 90 wt%, of the above polyamide or polyamide blend.

In one embodiment the thermo-mechanically stable layer is made of a polymer composition comprising pure PA6 or PA6-6,6.

In another embodiment the thermo-mechanically stable layer is made of a blend of an aliphatic polyamide with up to 40 wt% PA-6I,6T (Selar®) or PA-MXD6.

In a further embodiment, the polymer composition of the thermo-mechanically stable layer may comprise in addition to a polyamide, also up to 50 wt% of an ethylene vinyl alcohol copolymer (EVOH) having an ethylene content of 35 mol% or higher.

The polymer composition of the thermo-mechanically stable layer should have a melting temperature above 150°C, such as above 170°C, and a Young's Modulus of above 2.0 GPa, i.e a higher tensile stiffness than the polyethylene polymers in the laminated structure. The resistance to elongation and Young's Modulus is important in order to withstand pressures which may crack the unsupported aluminium foil of the opening laminate membrane, i.e. a high Young's modulus minimises the extent of cracking and the crack width.

In contrast to low density polyethylene polymers, which initiate softening and melting at a much lower temperature, such as at 80°C (Vicat) and melting at around 100°C, the polymer composition of the thermo-mechanically stable layer stays intact, and maintains its better mechanical strength, such as tensile strength, and stability properties also at elevated temperatures. Thus, when the laminated structure is exposed to pressure changes or other mechanical force, the polymer composition layer can withstand pressure changes and forces without affecting the aluminium metal foil. The bulk material layer may have a grammage from 100 to 350 g/m², such as from 100 to 200 g/m². The bulk material may be a cellulose-based material, or a multilayer configuration of several materials of different densities and cellulose fiber types.

Conventional Liquid Packaging Board (LPB) grades may be used for the laminated packaging materials of the invention. Such paperboard grades are commercially available as "Liquid Packaging Board" Duplex or Triplex paperboard grades, that are normally coated with a printable clay coat on its outer, printable side.

An example of bulk material layer, which is different from conventional liquid paperboard grades, is so-called Containerboard. It normally has a quite high density but a lower inherent bending stiffness, in comparison to conventional liquid packaging paperboard. Such materials have a bending stiffness at least 30 %, such at least 40% such at least 50 % lower, than the bending stiffness of a liquid carton paperboard, at a corresponding grammage when excluding the printable coating (clay-coat) grammage. Containerboard still contributes to the total mechanical properties and bending stiffness of a laminated packaging material, however, by providing a distance layer in a sandwich construction between facing layers, which facing layers have a higher Young's modulus (such as aluminium foil), and by having higher compression strength properties in the in-plane (x-y) of the layer, than conventional paperboard for liquid packaging.

Containerboard is also known as corrugated case material (CCM), and there are two types of paper that make up containerboard, i.e. linerboard material, also commonly called Kraft liner or Test liner, and fluting (or corrugating medium) material. Liner board normally has a density lower than 850 kg/m³, such as lower than 835 kg/m³, is brown or beige and comprises mainly softwood fibres, such as spruce and pine fibres.

Fluting is the paper product normally used as corrugating medium in corrugated container-paperboards, having a density from 600 to 750 kg/m³, such as from 600 to 700 kg/m³, normally around 650 kg/m³. Fluting paper is brown or beige and contains mostly short fibres, and is generally, just like linerboard, a low-cost, low-quality paper.

The fluting medium would, however, form a spacer layer, which is non-fluted, by being a lower-stiffness and lower-cost fibrous material that may provide sufficient distance in a sandwich construction for a laminated liquid carton packaging material. Fluted spacer layers, i.e. well-formed spacer layers, are not within the scope of the present invention. Corrugated carton materials would pose quite different technical implications and requirements to liquid carton laminated packaging materials, and are not encompassed by the present invention.

Containerboard materials thus have lower bending stiffness than corresponding paperboards for liquid packaging, but have, on the other hand, a higher SCT index, i.e. a higher SCT value per grammage unit in the machine direction (MD), than a normal liquid paperboard material, or than other paper or cellulose materials that would be suitable in this context.

The SCT value is a property measured by the international standard ISO9895, and which is relied on to compare different containerboard materials with each other. The SCT or Short Compression Test measures the internal compression resistance of paper fibres, i.e. the in-plane compression strength of a paper, in CD and MD. This property varies with the grammage of the specific paper measured on. Grammage of paper products is measured in accordance with ISO 536.

Packages made from a material having a higher SCT index, have better stackability, and it is thus a measurement of compression strength per grammage in the in-plane (x-y plane) of a carton material. Containerboard materials normally have an SCT index of more than 30 Nm/g in MD, and would thus provide i.a. the required compression strength and stackability properties for a liquid paperboard laminate.

For comparison, today's liquid paperboard materials have an SCT index of about 25 Nm/g, but are then also optimised regarding all other properties, since they are relied on as the main provider of dimensional stability in liquid carton laminated packaging materials. When replacing today's optimised liquid paperboard with a low-cost spacer layer in a sandwich structure in a laminate, such a spacer layer needs to have a higher SCT index, of above 30 Nm/g, to compensate for the loss of properties when removing the state-of-the-art paperboard.

The thermoplastic polymer of the innermost heat sealable layer may be a polyolefin, such as polyethylene.

Suitable thermoplastic polymers for outermost and innermost heat sealable liquid-tight layers in the laminated packaging material of the invention, are polyolefins such as polyethylene and polypropylene homo- or co-polymers, preferably polyethylenes and more preferably polyethylenes selected from the group consisting of low density polyethylene (LDPE), linear LDPE (LLDPE), single-site catalyst metallocene polyethylenes (m-LLDPE) and blends or copolymers thereof. According to a preferred embodiment, the outermost heat sealable and liquid-tight layer is an LDPE, while the innermost heat sealable, liquid-tight layer is a blend composition of m-LLDPE and LDPE for optimal lamination and heat sealing properties. The outer- and innermost thermoplastic polymers layers may be applied by (co-)extrusion coating of the molten polymer to a desired thickness. The outer- and/ or innermost liquid-tight and heat sealable layers may alternatively be applied in the form of pre-manufactured, oriented or non-oriented films. According to another embodiment, the outermost heat-sealable, liquid-tight and protective thermoplastic polymer layer may be applied by means of an aqueous dispersion coating of a thermoplastic polymer, when only low thickness of such an outermost layer is desired.

The same thermoplastic polyolefin-based materials, in particular polyethylenes, as listed above regarding the outermost and innermost layers, may also be suitable in bonding layers interior of the laminated material, e.g. between the bulk material layer, and the barrier metal foil.

The thermo-mechanically stable polymer layer is thus laminated between the aluminium metal foil and the bulk material layer together with at least one intermediate bonding layer of a thermoplastic polymer.

Thus, step b) of the method of the invention is carried out by melt co-extruding a molten multilayer of at least one intermediate bonding layer of a thermoplastic polymer together with the thermo-mechanically stable polymer, between the web of the aluminium metal foil and the web of the bulk material layer, and then pressing the layers to adhere to each other in the lamination roller nip.

The aluminium metal foil may be 9 µm or thinner, such as 7 µm or thinner, such as thinner than 6.5 µm, such as 6.3 µm. By the support of the thermo-mechanically stable polymer layer, more robust and stronger opening laminate membranes are formed, thus supporting the aluminium metal foil, which is itself vulnerable to thermal and mechanical stress, such as sterilization temperatures and sudden pressure changes, in the filling machine operations, during the forming, filling and sealing of packages from the laminated packaging material.

Alternatively, the aluminium foil may be made even thinner, such as 6 µm or thinner, such as 5 µm or thinner. Thanks to the support of the thermo-mechanically stable polymer layer, the performance of the opening laminate membranes can still be kept at an acceptable level, when subject to such thermal and mechanical stress.

The thermo-mechanically stable layer may be applied at an amount from 0.5 to 10 g/m², such as from 1 to 6 g/m², such as from 2 to 4 g/m².

The aluminium metal foil is thus laminated to the bulk material layer by at least one intermediate bonding layer of a polyolefin, such as polyethylene, such as low density polyethylene (LDPE) or of an adhesive polymer, such as a polyolefin-based polymer modified with hydroxylic, or carboxylic functional groups, or of a blend thereof.

Suitable adhesive polymers for extrusion lamination of bonding layers interior of the laminated material, e.g. as intermediate bonding layer between an innermost heat sealable layer and an aluminium metal foil, are so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers.

Corresponding modified polypropylene-based thermoplastic adhesives or bonding layers may also be useful, depending on the requirements of the finished packaging containers.

Such adhesive polymer layers or "tie" layers may be applied together with the innermost heat sealable thermoplastic polymer layer, or together with further intermediate bonding layers between the bulk material layer and the aluminium metal foil, in a co-extrusion coating operation.

When the thermo-mechanically stable polymer layer is a polyamide, the best adhesion effect from co-extrusion coating with an adhesive polymer has been seen when the adhesive polymer is a low density polyethylene or a linear low density polyethylene base polymer which has been grafted with monomers containing maleic anhydride groups, i.e. MAH-g-PE.

EAA or EMAA adhesive polymers on the other hand, provide the best possible adhesion, as an adhesion polymer layer for bonding an adjacent polyethylene layer to an aluminium foil, why the adhesive polyer layer on the inner side of the aluminium metal foil is preferably EAA or EMAA.

The thermo-mechanically stable polymer layer may be melt co-extrusion coated together with the at least one intermediate bonding layer between the aluminium metal foil and the bulk material layer in one common step b-d, as described above. This is the most economical and rational way of applying the laminating polymer layers, i.e. together with other molten polymer layers in one co-extrusion operation. If a high amount of polymer is to be applied between the bulk layer and the aluminium foil, it may be feasible, however, to melt extrude them in two extrusion lamination steps.

In a further embodiment, the outer heat sealable layers of the laminated material may be provided as one or two pre-manufactured films. Thus, such a film may be pre-laminated to the bulk material layer, and / or be pre-laminated to the aluminium metal foil, to be later laminated to the inner side of the bulk layer. When films are laminated to barrier layers or printed, decorated layers, they may be laminated by mere heat-pressure lamination of the films to the adjacent layer, especially if a pre-coated or integrated layer of an adhesive polymer such as EAA or EMAA is present or applied on one of the lamination surfaces.

In an embodiment, the bulk material layer is laminated to the aluminium metal foil, in the following order, by a first intermediate bonding layer of a thermoplastic layer, which is adhered to and contacting the bulk material layer, a first adhesive polymer layer, which is adhered to and contacting the opposite side of the first intermediate bonding layer of polyethylene, the thermo-mechanically stable layer, which is adhered to and contacting the opposite side of the first adhesive polymer layer, and a second adhesive polymer layer, which is adhered to and contacting the opposite side of the thermo-mechanically stable layer and binding the thermo-mechanically stable layer to the aluminium metal foil.

Preferably, the intermediate bonding layer of a thermoplastic layer is LDPE, to create a strong bond to a cellulose-based bulk material layer. The LDPE may be co-extruded at a high termperature above 300°C, such that the polymer melt may penetrate the cellulose material surface of the bulk layer and bond strongly thereto. The adhesive polymers have to be extruded at lower temperatures, such as lower than 280C, and sufficiently high adhesion strength may not be reached. The adhesion bond between the LDPE layer and e.g. a paperboard is strong enough to resist delamination in delamination tests. The delamination normally would occur first at any other layer interface than the one between the LDPE and the paper surfaces.

Preferably, the adhesive polymer of the first and second adhesive layers is then a polyethylene graft-modified with maleic anhydride (MAH-g-PE). The adhesion of LDPE to polyamide is higher, with an adhesive polymer of the maleic anhydride-modified type, and the adhesion to aluminium foil is good and sufficient for the outer side thereof. In this embodiment, it is preferred that the intermediate bonding layer of polyethylene is applied at an amount from 5 to 10 g/m², such as from 6 to 8 g/m², which is an economic and suitable layer thickness of the bonding layer, both from packaging laminate strength (adhesive strength) and from lamination manufacturing process point of view. The minimum amount of such a further bonding layer of 5 g/m², such as 8 g/m² is needed to support the thermo-mechanically stable layer during the co-extrusion lamination operation, by sufficient heat and stability provided to the melt curtain of the intermediate bonding, adhesive and thermo-mechanically stable polymer layers. It is in particular needed to provide sufficient heat to bond strongly to the bulk material layer, as explained above.

In the laminated opening membrane material, the laminated membrane material (L) thus comprises the following sequence of laminate layers, from the outside of the laminated opening membrane material to the inside, i.e. the outermost thermoplastic polymer layer, an intermediate bonding layer of a thermoplastic polymer, a first adhesive polymer layer, a thermo-mechanically stable layer, a second adhesive layer, an aluminium metal foil and the innermost thermoplastic layer.

Preferably, the intermediate bonding layer of a thermoplastic polymer is a low density polyethylene and the first and second adhesive polymers are maleic-anhydride graft-modified polyethylene, for best possible adhesion strength between the thermo-mechanically stable polyamide-based layer and the LDPE layer on the one side, and the aluminium metal foil on the other side.

Thus, step b) of the method of the invention may be carried out by melt co-extruding a molten multilayer polymer curtain of an intermediate bonding layer of a thermoplastic polymer to contact the web of the bulk material layer, together with a first adhesive polymer layer to adhered to and contact the opposite side of the intermediate bonding layer of thermoplastic polymer, and the thermo-mechanically stable polymer to contact the opposite side of the first adhesive polymer layer, and further a second adhesive polymer layer to adhere to and contact the opposite side of the thermo-mechanically stable polymer layer, as well as adhering to and contacting the web of the aluminium metal foil on the outer side thereof, and simultaneously pressing the layers to adhere to each other in the lamination roller nip.

### Examples and description of drawings

In the following, embodiments of the invention will be described with reference to the drawings, of which:
Fig. 1a is showing a schematic, cross-sectional view of a laminated packaging material with an opening area, where there is no bulk material layer, but a "membrane" of the further laminate layers, according to the invention,
Fig. 1b shows a schematic, cross-sectional view of a further embodiment of such a laminated packaging material,
Fig. 2a shows schematically an exampel of a method, for laminating the aluminium metal foil to the bulk material layer, in accordance with the invention,
Fig. 2b shows schematically an example of a method, for laminating the innermost thermoplastic polymer layer to the previously laminated bulk material and aluminium foil, resulting from the operation described in Fig. 2a, in accordance with the invention,
Fig. 3a, 3b, 3c show typical examples of packaging containers produced from the laminated packaging material according to the invention,
Fig. 4 shows the principle of how packaging containers may be manufactured from the packaging laminate in a continuous, roll-fed, form, fill and seal process,
Fig. 5 is shows at which applied pressure a laminated opening membrane breaks when subject to a quick pressure "puff' on one side of the membrane, and
Fig. 6 shows how an overpressure, applied to one side of a laminated opening membrane, influences the OTR of the membrane.

### Test methods

Oxygen transmission (OTR) was measured according to ASTM F1927-14 och ASTM F1307-14, at 23°C temperature with air as testgas, and a relative moisture content RH of 50.

The unit of measured values is accordingly: cm³ per sample/ (0.2 atm, 24 hrs) at 23°C and 50%RH. The sample is a piece of the packaging material comprising the opening membrane, which has a diameter of 20 mm.

The method for determining OTR identifies the amount of oxygen per surface and time unit at passing through a material at a defined temperature, given atmospheric pressure, and chosen driving force.

"Membrane strength at burst" was tested by fastening a piece of the packaging material comprising the opening membrane, in a position such that it may be pressurised from the inside (i.e. the inside of packaging material and resulting packaging container when made from the packaging material) with air during a certain time. For these tests, the time was set to 0.250 seconds. Starting from 0.7 bar above the surrounding atmospheric pressure at which the experiment was done, the pressure was gradually and stepwise increased by incremental steps of 0.1 bar (at each step the pressure was applied for 0.250 seconds) until the membrane broke.

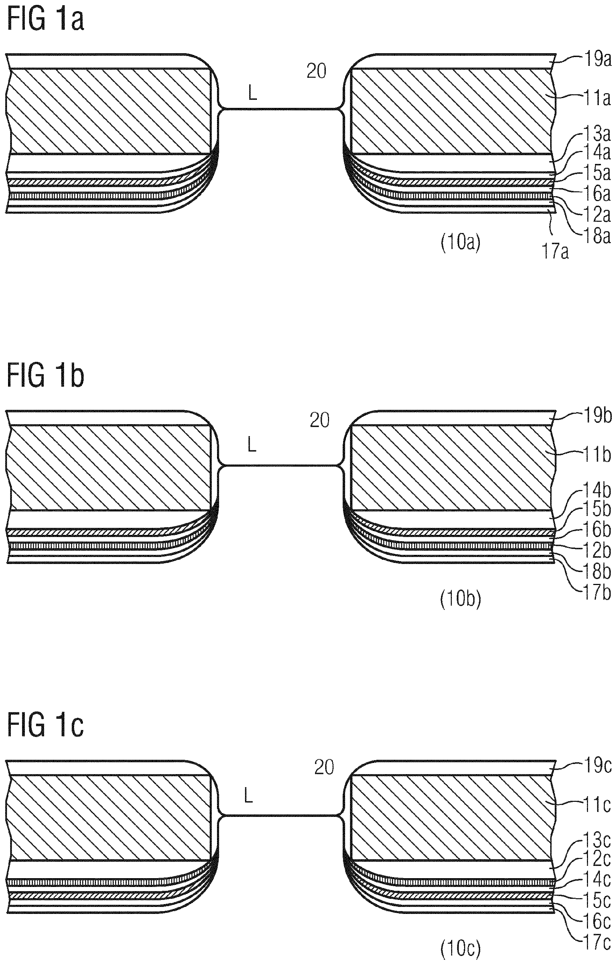

In Fig. 1a, there is thus shown, in cross-section, a first embodiment of a laminated packaging material, 10a, of the invention. It comprises a bulk material layer 11a of a paperboard for liquid packaging, having a grammage of about 270 g/m².

On the inner side of the bulk material layer 11 a, which side is to be directed towards the inside of a packaging container formed from the laminated material, the laminated material comprises an aluminium metal foil 12a. The aluminium metal foil has a thickness of 5 µm. The aluminium metal foil is laminated to the bulk material layer by a multilayer bonding structure comprising a first bonding layer 13a of 8 g/m² of LDPE adhering to and directly contacting the bulk material paperboard, a first "tie" layer 14a of 3 g/m² of a MAH-g-LDPE adhesive polymer adjacent and directly contacting the other side of the LDPE layer, a thermo-mechanically stable layer of 4 g/m² of a PA-6 polyamide 15a applied adjacent and in direct contact with the first layer of adhesive polymer, and a second adhesive polymer or so-called "tie" layer 16a of 3 g/m² of a MAH-g-LDPE adhesive polymer adjacent and directly contacting the thermo-mechanically stable PA layer. The second layer of adhesive polymer adheres also directly to the outer side of the aluminium metal foil, i.e. binds the thermo-mechanically stable layer 15a to the aluminium foil 12a.

On the other, inner side of the aluminium metal foil, there is an innermost, heat sealable thermoplastic layer 17a, which is also the layer of the packaging laminate that will be in direct contact with the filled food product in a final packaging container. The innermost, heat sealable polymer layer 17a is melt co-extrusion coated onto the aluminium foil together with an intermediate adhesive layer of EAA 18a.

The lamination of the bulk material layer 11a and the aluminium metal foil 12a by the (co-)extrusion lamination of the polyamide thermo-mechanically stable layer 15a, the LDPE bonding layer and the first and second adhesive polymer layers was done before the coextrusion coating of the innermost thermoplastic polymer layer 17a onto the aluminium metal foil.

This laminating layer configuration has the advantage of providing high adhesion to the bulk material layer, since the LDPE may be extrusion coated onto the cellulose surface at a higher temperature than any adhesive polymers or thermo-mechanically stable polymers. Furthermore, the adhesion to the outside LDPE layer on the outer side of the bulk material layer, through the opening hole in the laminated membrane, will be better due to this higher temperature. It is a further advantage to include the thermo-mechanically stable polymer layer between the bulk material layer and the barrier layer, rather than on the inside of the barrier layer, thus avoiding any interference with the heat sealing of the inner layers at package formation.

The innermost thermoplastic polymer layer is a heat sealable polymer selected from polyolefins, such as polyethylenes, such as in this case a composition comprising a blend of a metallocene-catalysed linear low density polyethylene (m-LLDPE) and a low density polyethylene (LDPE). Alternatively, or also, the heat sealable material on the innermost side of the laminated packaging material may be divided in two part-layers of different kinds of polyethylenes, e.g. there may be a first intermediate layer of LDPE contacting the adhesive polymer and a second innermost layer of the above blend.

On the other side, the outside of the bulk material layer 11a, the packaging material comprises an outermost liquid-tight and transparent layer 19a of an LDPE, which was extrusion coated onto the bulk material layer.

In Fig. 1b, a similar cross-section, of a second embodiment of a laminated packaging material, 10b, is shown. The laminated material is the same as the material in Fig. 1a, except from the layer configuration between the bulk material layer and the aluminium metal foil. The multilayer bonding layer configuration does not include the LDPE layer towards the inner side of the paperboard bulk as in Fig. 1a, but only the middle, thermo-mechanically stable layer 15b of polyamide, in an amount of 4 g/m², surrounded by the first and second adhesive polymer layers 14b and 16b of EAA at an amount of from 3 to 4 g/m² each. The first adhesive polymer layer 14b is thus directly and adjacently contacting the paperboard, and the second adhesive polymer layer 16b is directly and adjacently contacting the aluminium foil 12b.

In a different embodiment, the first layer of adhesive polymer could also be removed, such that the thermo-mechanically stable polymer layer 15, being a polyamide, would instead directly adhere to and be in direct contact with the bulk paperboard 11. Instead, for extrusion-lamination process purposes, the thicknesses of the layers of adhesive polymer may be increased, or an additional layer of LDPE 13 is added to bond the second layer of adhesive polymer 16 to the aluminium foil. The adhesion of the polyamide of the thermo-mechanically stable layer to the outermost layer of LDPE 19, on the opposited side of the paperboard, through the hole, within the membrane layer configuration, may be less good, but may work sufficiently well for small straw holes, perforations and the like.

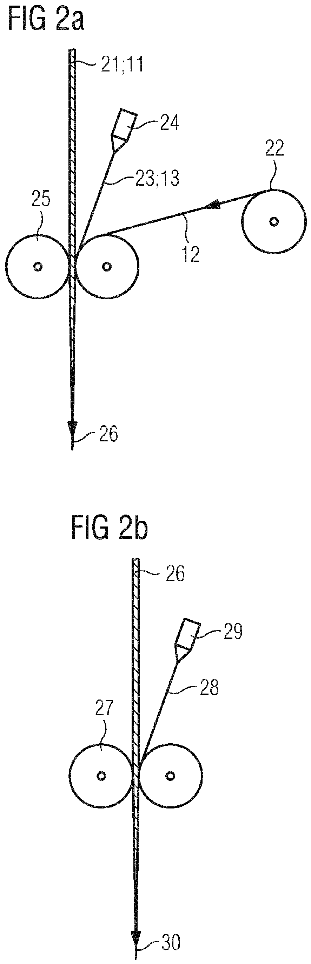

In Fig. 2a it is schematically illustrated how a web of the paperboard bulk layer 11, as described in Fig. 1, is forwarded from a reel 21 and extrusion laminated to a web of the aluminium metal foil 12, which is forwarded from a reel 22 in a lamination roller nip 25. A molten polymer curtain 23 of the bonding layers comprising the multilayer configuration of Fig. 1a or 1b, or the single layer of LDPE of Fig. 1c, is extruded 24 into the lamination nip 25, between the bulk material layer 11 and the aluminium foil 12, to be pressed together and cooled to solidify the molten lamination polymers, thus permanently adhering the paperboard and the aluminium foil to each other to produce a pre-laminate 26. The resulting pre-laminate is forwarded to the next operation of the lamination process, in this case as further described in connection with Figure 2b.

In Fig. 2b it is schematically illustrated how the web of the pre-laminate 26 of the bulk material layer, the aluminium metal foil and the intermediate bonding layer or layers of thermoplastic polymers as in Figures 1a-1c is forwarded to a further lamination roller nip 27. At the roller nip 27, a molten curtain 28 of the inside polymer layers, i.e. the adhesive polymer layer 18a; 18b; 14c and 16c, thermo-mechanically stable layer 15c, and the innermost layer 19a; 19b; 19c, are co-extruded 29 down into the lamination roller nip 27, and being cooled to be coated as a multilayer film coating onto the opposite, inner side of the aluminium foil 12, by pressing and solidifying the polymer layers 18, 19, 14-16, to the inner surface of the web of the aluminium foil. The resulting laminate 30 may be forwarded to a further, similar lamination operation for extrusion-coating lamination of the outside layer 19 of LDPE onto the opposite, outer side of the paperboard layer 11, or if this was already done before the above lamination steps, to a reeling station for further transport and storage of the packaging laminate on a reel.

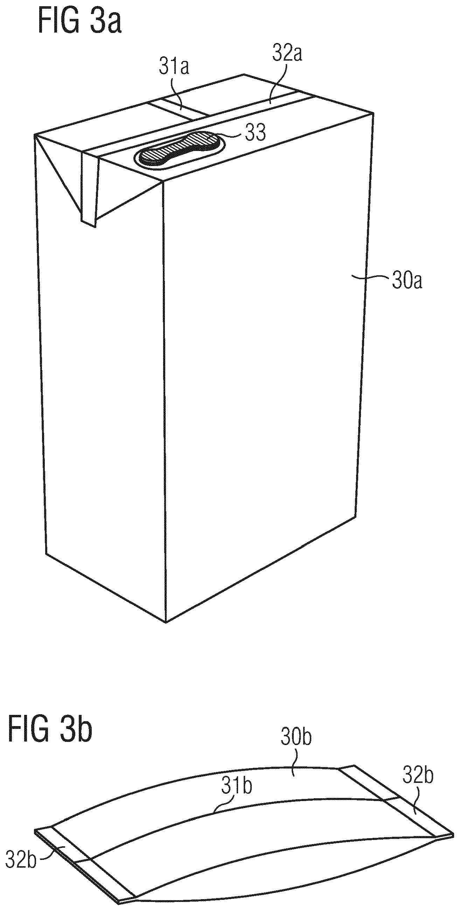

Fig. 3a shows an embodiment of a packaging container 30a produced from the packaging laminate 10a;10b;10c according to the invention. The packaging container is particularly suitable for beverages, sauces, soups or the like. Typically, such a package has a volume from about 100 to 1000 ml. It may be of any configuration, but is preferably brick-shaped, having longitudinal and transversal seals 31a and 32a, respectively, and optionally an opening device 33. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the half-folded packaging container is still is easy to handle and dimensionally stable when put on a shelf in the food store or on a table or the like.

Fig. 3b shows an alternative, preferred example of a packaging container 30b produced from an alternative packaging laminate according to the invention. The alternative packaging laminate is thinner by having a thinner cellulose bulk layer 11, and thus it is not dimensionally stable enough to form a cuboid, parallellepipedic or wedge-shaped packaging container, and is not fold formed after transversal sealing 32b. It will thus remain a pillow-shaped pouch-like container and be distributed and sold in this form.

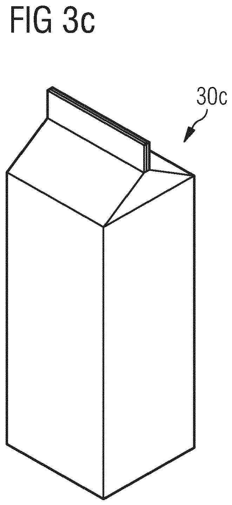

Fig. 3c shows a gable top package 30c, which is fold-formed from a pre-cut sheet or blank, from the laminated packaging material comprising a bulk layer of paperboard and the durable barrier film of the invention. Also flat top packages may be formed from similar blanks of material.

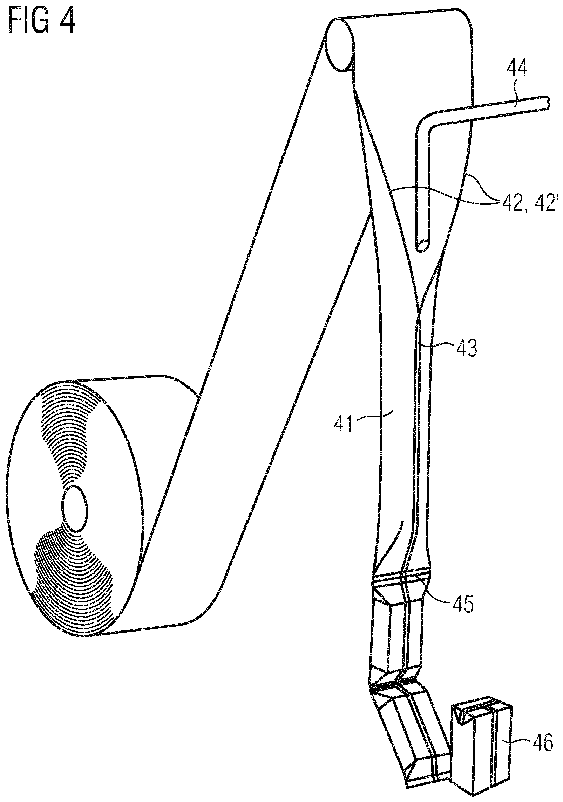

Fig. 4 shows the principle as described in the introduction of the present application, i.e. a web of packaging material is formed into a tube 41 by the longitudinal edges 42 of the web being united to one another in an overlap joint 43. The tube is filled 44 with the intended liquid food product and is divided into individual packages by repeated transversal seals 45 of the tube at a pre-determined distance from one another below the level of the filled contents in the tube. The packages 46 are separated by incisions in the transversal seals and are given the desired geometric configuration by fold formation along prepared crease lines in the material.

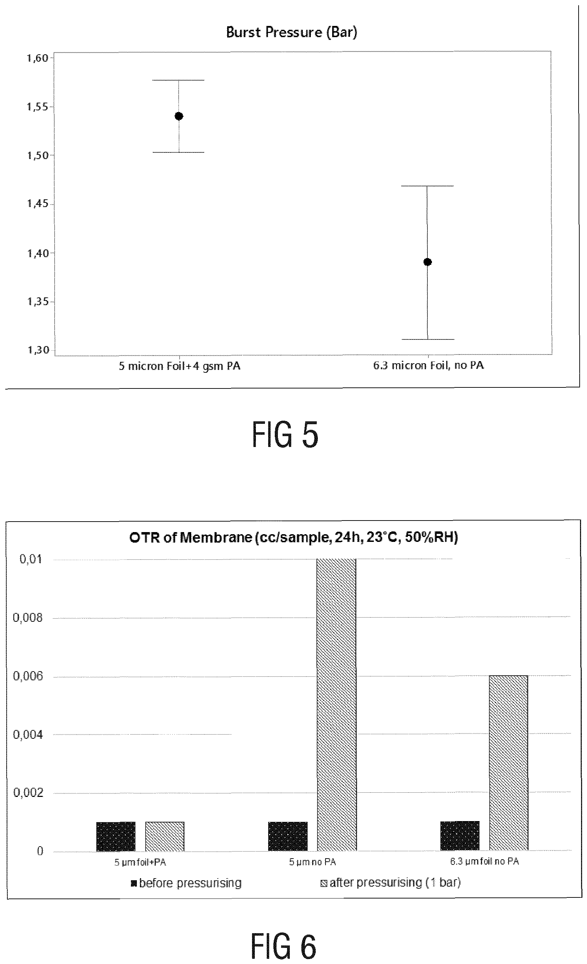

Fig. 5 is a diagramme, which shows at which pressure the laminated opening membrane breaks, in a test measuring the "Membrane strength at burst" test, as explained above. The measured values are shown with the standard deviation indicated. The openings have a diameter of 20 mm. It can be seen that a laminated opening membrane with an aluminium foil which is not supported, i.e. only laminated to the conventional low density polyethylene layers, breaks earlier, at a lower applied membrane pressure. An identical membrane, however also laminated with a few grams per squaremeter of polyamide (PA6), as a co-extruded layer together with further intermediate thermoplastic bonding layers between the bulk layer material and the aluminium metal foil, does not break until at a higher applied membrane pressure. This is still the case, even if the aluminium metal foil is thinner, i.e. 5 µm instead of 6.3 µm. This effect is also notable on the quality of the laminated opening membranes, in packaging containers produced from the laminated packaging materials. It can be seen as improved openability of the membranes that have support by an additional polyamide layer, as fewer occurances of frayed edges around the opening hole, as well as on the absence of any defects in unopened opening membranes. This shows that the laminated opening membrane material of the invention provides better support to the aluminium metal foil barrier and prevents damages from the mechanical stress that the packaging material is exposed to in a filling machine. It is known that the further application of heat to the membrane has a further detrimental effect to such an un-supported aluminium foil in opening membranes. The higher melting point of the thermo-mechanically polyamide composition, normally around or above 200°C, provides sufficient support to the aluminium foil to still resist such mechanical damage and stress even though the other polyolefin-based layers softens and become too flexible to provide mechanical support.

Fig. 6 is a diagramme showing the influence of overpressure applied to a laminated opening membrane, on the OTR of the membrane. Thus, the OTR was measured (23 °C, 50% RH) on samples comprising the laminated opening membrane, before and after exerting a pressure of 1 bar on one side of the membrane. The two laminated opening membranes tested in Fig. 5 were also tested here, regarding influence on the OTR. In addition, a sample having no polyamide, but a thinner aluminium foil was also tested.

It may be concluded from the results, that a laminated membrane having a thinner aluminium foil of 5 µm is significantly more sensitive to such stress from pressure acting on the membrane, than the thicker aluminium metal foil of 6.3 µm. It can also be concluded that a few grams per squaremeter of polyamide-6 may prevent any damage on the laminated membrane, also when the aluminium metal foil is as thin as 5.0 µm.

The invention is not limited by the embodiments shown and described above, but may be varied within the scope of the claims. As a general remark, the proportions between thicknesses of layers, distances between layers and the size of other features and their relative size in comparison with each other, should not be taken to be as shown in the figures, which are merely illustrating the order and type of layers in relation to each other all other features to be understood as described in the text specification.

## Claims

1. Laminated cellulose-based, liquid food packaging material (10a;10b), comprising a bulk material layer (11a; 11b) with through-going holes, openings or slits (20), each defining an opening area, further comprising an outermost, transparent and protective thermoplastic polymer layer (19a;19b) arranged on the outside of the bulk material layer, i.e. on the side to be directed outwards from a packaging container made from the laminated material, and an innermost, heat sealable and liquid-tight thermoplastic polymer layer (17a;17b), which is intended to be in direct contact with the packed food product, an aluminium metal foil (12a;12b) for providing gas barrier properties, which is laminated between the bulk material layer and the innermost thermoplastic polymer layer, wherein a thermo-mechanically stable polymer layer (15a;15b) is also laminated between the bulk material layer and the innermost thermoplastic layer, the thermomechanically stable polymer layer being of a polymer composition having a melting point higher than 150°C and comprising at least 70 wt-% of a polymer selected from the group consisting of ethylene vinyl alcohol copolymer (EVOH) and polyamide (PA) resulting from polymerization of monomers selected from the group consisting of Caprolactam, Laurolactam, Undecanolactam, Adipic Acid, Azelaic Acid, Sebacic Acid, Dodecanedioic Acid, Terephatalic Acid, Isophathalic Acid, Butanediamine, Hexamethylene diamine, Trimethylhexamethylene diamine and Metaxyxylene diamine (MXDA) monomer, or of a blend of two or more polyamidesobtained from different such monomer combinations, the amount of MXDA monomer included in the polyamide being in total 80 mol% or less, wherein the thermo-mechanically stable layer (15a;15b) is laminated between the aluminium metal foil (12a;12b) and the bulk material layer (11a; 11b), together with at least one intermediate bonding layer (13a, 14a,b, 16a,b) of a thermoplastic polymer and wherein the aluminium metal foil, the inner- and outermost thermoplastic polymer layers and the thermo-mechanically stable polymer layer, all extend throughout the areas of the holes, openings or slits of the bulk material layer, such that they are laminated and sealed to each other to form a laminated opening membrane material, not containing the bulk material layer, within the opening areas.

2. Laminated packaging material as claimed in claim 1, wherein the aluminium metal foil (12a;12b) is 6 µm or thinner, such as 5 µm or thinner.

3. Laminated packaging material as claimed in in any one of claims 1 and 2, wherein the thermo-mechanically stable layer (15a;15b) is applied at an amount from 0.5 to 10 g/m², such as from 1 to 6 g/m², such as from 2 to 4 g/m².

4. Laminated packaging material as claimed in any one of the preceding claims, wherein the bulk material layer (11a; 11b) has a grammage from 100 to 350 g/m².

5. Laminated packaging material as claimed in any one of the preceding claims, wherein the bulk material layer (11a) is laminated to the aluminium metal foil (12a), in the following order, by a first intermediate bonding layer of polyethylene (13a), which is adhered to and contacting the bulk material layer, a first adhesive polymer layer (14a), which is adhered to and contacting the opposite side of the first intermediate bonding layer of polyethylene, the thermo-mechanically stable layer (15a), which is adhered to and contacting the opposite side of the first adhesive polymer layer, and a second adhesive polymer layer (16a), which is adhered to and contacting the opposite side of the thermo-mechanically stable layer and binding the thermo-mechanically stable layer to the aluminium metal foil.

6. Laminated packaging material as claimed in claim 5, wherein the adhesive polymer (14a, 16a) is a polyethylene graft-modified with maleic anhydride (MAH-g-PE).

7. Laminated packaging material as claimed in any one of claims 5 or 6, wherein the intermediate bonding layer of polyethylene (13a) is applied at an amount from 5 to 10 g/m², such as from 6 to 8 g/m².

8. Laminated opening membrane material (L), covering an opening area of a laminated packaging material (10a; 10b), the opening area being defined by a through-going hole, opening or slit (20) in a bulk material layer (11a; 11b) comprised in the laminated packaging material, the laminated membrane material comprising the following laminated layers from the outside of the laminated opening membrane material to the inside, i.e. corresponding to the outside and inside of a package comprising the laminated opening membrane material, an outermost, transparent and protective thermoplastic polymer layer (19a; 19b), at least one intermediate bonding layer (13a, 14a,b, 16a,b) of a thermoplastic polymer, a thermo-mechanically stable layer (15a;15b), of a polymer composition having a melting point higher than 150°C and comprising at least 70 wt-% of a polymer selected from the group consisting of ethylene vinyl alcohol copolymer (EVOH) and polyamide (PA) resulting from polymerization of monomers selected from the group consisting of Caprolactam, Laurolactam, Undecanolactam, Adipic Acid, Azelaic Acid, Sebacic Acid, Dodecanedioic Acid, Terephatalic Acid, Isophathalic Acid, Butanediamine, Hexamethylene diamine, Trimethylhexamethylene diamine and Metaxyxylene diamine (MXDA) monomer, or of a blend of two or more polyamides obtained from different such monomer combinations, the amount of MXDA monomer included in the polyamide being in total 80 mol% or less, an aluminium metal foil (12a; 12b), at least one adhesive polymer layer (14a,16a,18a; 14b,16b,18b) and an innermost, heat sealable and liquid-tight thermoplastic polymer layer (17a;17b).

9. Laminated opening membrane material, as claimed in claim 8, wherein the laminated membrane material (L) comprises the following sequence of laminate layers, from the outside of the laminated opening membrane material to the inside, i.e. the outermost thermoplastic polymer layer (19a), an intermediate bonding layer (13a) of a thermoplastic polymer, a first adhesive polymer layer (14a), a thermo-mechanically stable layer (15a), a second adhesive polymer layer (16a), an aluminium metal foil (12a) and the innermost thermoplastic layer (17a).

10. Laminated opening membrane material, as claimed in claim 9, wherein the intermediate bonding layer (13a) of a thermoplastic polymer is a low density polyethylene and the first and second adhesive polymers (14a, 16a) are maleic-anhydride graft-modified polyethylene.

11. Liquid food packaging container (30a; 30b; 30c) comprising the laminated packaging material as defined in any one of claims 1-10.

12. Method for manufacturing the laminated cellulose-based, liquid food packaging material as defined in any one of claims 1-10, comprising the steps, in any order or in any combination, of
a) forwarding (21, 22) a first web (11) of a bulk material layer (11a; 11b) having through-going holes, openings or slits (20), each defining an opening area, and a second web (12) of an aluminium metal foil (12a;12b) towards a lamination roller nip,
b) laminating (25) the first and second webs to each other by melt co-extruding (24) a molten multilayer of at least one intermediate bonding layer (13a, 14a,b, 16a,b) of a thermoplastic polymer together with a thermo-mechanically stable polymer (15a;15b), between the web of the aluminium metal foil (12a; 12b) and the web of the bulk material layer (11a; 11b), and then pressing the layers to adhere to each other in the lamination roller nip,
the thermo-mechanically stable polymer layer (15a;15b), being a polymer composition having a melting point higher than 150°C, comprising at least 70 wt-% of a polymer selected from the group consisting of ethylene vinyl alcohol copolymer (EVOH) and polyamide (PA) resulting from polymerization of monomers selected from the group consisting of Caprolactam, Laurolactam, Undecanolactam, Adipic Acid, Azelaic Acid, Sebacic Acid, Dodecanedioic Acid, Terephatalic Acid, Isophathalic Acid, Butanediamine, Hexamethylene diamine, Trimethylhexamethylene diamine and Metaxyxylene diamine (MXDA) monomer, or of a blend of two or more polyamides obtained from different such monomer combinations, the amount of MXDA monomer included in the polyamide being in total 80 mol% or less,
c) laminating (27, 18) an innermost heat sealable thermoplastic polymer layer (17a;17b) on the inner side of the web of the aluminium metal foil, opposite the side of the bulk material layer, d) laminating an outermost thermoplastic polymer layer (19a;19b) on the outer side of the web of the bulk material layer, opposite the side of the aluminium metal foil,
thus laminating the aluminium metal foil, the inner- and outermost thermoplastic polymer layers and the thermo-mechanically stable polymer layer to each other within the areas of the through-going holes, openings or slits, to form a laminated opening membrane material (L), not containing the bulk material layer, within the opening areas.

## Patentansprüche

1. Laminiertes cellulosebasiertes Verpackungsmaterial für flüssige Nahrungsmittel (10a; 10b), umfassend eine Grundmaterialschicht (11a; 11b) mit durchgehenden Löchern, Öffnungen oder Schlitzen (20), die jeweils einen Öffnungsbereich definieren, ferner umfassend eine äußerste, transparente und schützende thermoplastische Polymerschicht (19a; 19b), die an der Außenseite der Grundmaterialschicht angeordnet ist, d. h. an der Seite, die von einem aus dem laminierten Material hergestellten Verpackungsbehälter nach außen zu richten ist, und eine innerste, heißsiegelbare und flüssigkeitsdichte thermoplastische Polymerschicht (17a; 17b), die für den direkten Kontakt mit dem verpackten Nahrungsmittelprodukt vorgesehen ist, eine Aluminiummetallfolie (12a; 12b) zum Bereitstellen von Gasbarriereeigenschaften, die zwischen der Grundmaterialschicht und der innersten thermoplastischen Polymerschicht laminiert ist, wobei eine thermomechanisch stabile Polymerschicht (15a; 15b) ebenfalls zwischen der Grundmaterialschicht und der innersten thermoplastischen Schicht laminiert ist, wobei die thermomechanisch stabile Polymerschicht aus einer Polymerzusammensetzung besteht, die einen Schmelzpunkt von mehr als 150 °C aufweist und zu mindestens 70 Gew.-% ein Polymer umfasst, das ausgewählt ist aus der Gruppe bestehend aus Ethylenvinylalkoholcopolymer (EVOH) und Polyamid (PA), das durch die Polymerisation von Monomeren entsteht, die ausgewählt sind aus der Gruppe bestehend aus Caprolactam-, Laurolactam-, Undecanolactam-, Adipinsäure-, Azelainsäure-, Sebacinsäure-, Dodecandisäure-, Terephthalsäure-, Isophthalsäure-, Butandiamin-, Hexamethylendiamin-, Trimethylhexamethylendiamin- und Metaxyxylendiamin(MXDA)-Monomer, oder aus einer Mischung aus zwei oder mehr Polyamiden, die aus unterschiedlichen Kombinationen derartiger Monomere gewonnen werden, wobei die Menge an MXDA-Monomer, die in dem Polyamid enthalten ist, insgesamt 80 Mol-% oder weniger beträgt, wobei die thermomechanisch stabile Schicht (15a; 15b) zusammen mit mindestens einer Bindungszwischenschicht (13a, 14a,b, 16a,b) aus einem thermoplastischen Polymer zwischen der Aluminiummetallfolie (12a; 12b) und der Grundmaterialschicht (11a; 11b) laminiert ist und wobei sich die Aluminiummetallfolie, die innerste und die äußerste thermoplastische Polymerschicht und die thermomechanisch stabile Polymerschicht allesamt durch die Bereiche der Löcher, Öffnungen oder Schlitze der Grundmaterialschicht erstrecken, sodass sie aufeinander laminiert und abgedichtet werden, um ein laminiertes Öffnungsmembranmaterial, das nicht die Grundmaterialschicht enthält, in den Öffnungsbereichen zu bilden.

2. Laminiertes Verpackungsmaterial nach Anspruch 1, wobei die Aluminiummetallfolie (12a; 12b) 6 µm oder weniger, zum Beispiel 5 µm oder weniger, dünn ist.

3. Laminiertes Verpackungsmaterial nach einem der Ansprüche 1 und 2, wobei die thermomechanisch stabile Schicht (15a; 15b) in einer Menge von 0,5 bis 10 g/m², zum Beispiel von 1 bis 6 g/m², zum Beispiel von 2 bis 4 g/m², aufgetragen ist.

4. Laminiertes Verpackungsmaterial nach einem der vorstehenden Ansprüche, wobei die Grundmaterialschicht (11a; 11b) eine Grammatur von 100 bis 350 g/m² aufweist.

5. Laminiertes Verpackungsmaterial nach einem der vorstehenden Ansprüche, wobei die Grundmaterialschicht (11a) in der folgenden Reihenfolge durch eine erste Bindungszwischenschicht aus Polyethylen (13a), die auf die Grundmaterialschicht geklebt ist und diese berührt, eine erste klebende Polymerschicht (14a), die auf die gegenüberliegende Seite der ersten Bindungszwischenschicht aus Polyethylen geklebt ist und diese berührt, die thermomechanisch stabile Schicht (15a), die auf die gegenüberliegende Seite der ersten klebenden Polymerschicht geklebt ist und diese berührt, und eine zweite klebende Polymerschicht (16a), die auf die gegenüberliegende Seite der thermomechanisch stabilen Schicht geklebt ist und diese berührt, auf die Aluminiummetallfolie (12a) laminiert ist und die thermomechanisch stabile Schicht an die Aluminiummetallfolie bindet.

6. Laminiertes Verpackungsmaterial nach Anspruch 5, wobei es sich bei dem klebenden Polymer (14a, 16a) um ein mit Maleinsäureanhydrid pfropfmodifiziertes Polyethylen (MAH-g-PE) handelt.

7. Laminiertes Verpackungsmaterial nach einem der Ansprüche 5 oder 6, wobei die Bindungszwischenschicht aus Polyethylen (13a) in einer Menge von 5 bis 10 g/m², zum Beispiel von 6 bis 8 g/m², aufgetragen ist.

8. Laminiertes Öffnungsmembranmaterial (L), das einen Öffnungsbereich eines laminierten Verpackungsmaterials (10a; 10b) abdeckt, wobei der Öffnungsbereich durch ein durchgehendes Loch, eine durchgehende Öffnung oder einen durchgehenden Schlitz (20) in einer Grundmaterialschicht (11a; 11b) definiert ist, die in dem laminierten Verpackungsmaterial enthalten ist, wobei das laminierte Membranmaterial die folgenden laminierten Schichten von der Außenseite des laminierten Öffnungsmembranmaterials zur Innenseite umfasst, d. h. entsprechend der Außenseite und der Innenseite einer Verpackung, umfassend das laminierte Öffnungsmembranmaterial, eine äußerste, transparente und schützende thermoplastische Polymerschicht (19a; 19b), mindestens eine Bindungszwischenschicht (13a, 14a,b, 16a,b) aus einem thermoplastischen Polymer, eine thermomechanisch stabile Schicht (15a; 15b) aus einer Polymerzusammensetzung, die einen Schmelzpunkt von mehr als 150 °C aufweist und zu mindestens 70 Gew.-% ein Polymer umfasst, das ausgewählt ist aus der Gruppe bestehend aus Ethylenvinylalkoholcopolymer (EVOH) und Polyamid (PA), das durch die Polymerisation von Monomeren entsteht, die ausgewählt sind aus der Gruppe bestehend aus Caprolactam-, Laurolactam-, Undecanolactam-, Adipinsäure-, Azelainsäure-, Sebacinsäure-, Dodecandisäure-, Terephthalsäure-, Isophthalsäure-, Butandiamin-, Hexamethylendiamin-, Trimethylhexamethylendiamin- und Metaxyxylendiamin(MXDA)-Monomer, oder aus einer Mischung aus zwei oder mehr Polyamiden, die aus unterschiedlichen Kombinationen derartiger Monomere gewonnen werden, wobei die Menge an MXDA-Monomer, die in dem Polyamid enthalten ist, insgesamt 80 Mol-% oder weniger beträgt, eine Aluminiummetallfolie (12a; 12b), mindestens eine klebende Polymerschicht (14a, 16a, 18a; 14b, 16b, 18b) und eine innerste, heißsiegelbare und flüssigkeitsdichte thermoplastische Polymerschicht (17a; 17b).

9. Laminiertes Öffnungsmembranmaterial nach Anspruch 8, wobei das laminierte Membranmaterial (L) die folgende Abfolge von Laminatschichten von der Außenseite des laminierten Öffnungsmembranmaterials zur Innenseite umfasst, d. h. die äußerste thermoplastische Polymerschicht (19a), eine Bindungszwischenschicht (13a) aus einem thermoplastischen Polymer, eine erste klebende Polymerschicht (14a), eine thermomechanisch stabile Schicht (15a), eine zweite klebende Polymerschicht (16a), eine Aluminiummetallfolie (12a) und die innerste thermoplastische Schicht (17a).

10. Laminiertes Öffnungsmembranmaterial nach Anspruch 9, wobei es sich bei der Bindungszwischenschicht (13a) aus einem thermoplastischen Polymer um ein Polyethylen von geringer Dichte handelt und es sich bei dem ersten und dem zweiten klebenden Polymer (14a, 16a) um mit Maleinsäureanhydrid pfropfmodifiziertes Polyethylen handelt.

11. Verpackungsbehälter für flüssige Nahrungsmittel (30a; 30b; 30c), umfassend das laminierte Verpackungsmaterial nach einem der Ansprüche 1-10.

12. Verfahren zum Herstellen des laminierten cellulosebasierten Verpackungsmaterials für flüssige Nahrungsmittel nach einem der Ansprüche 1-10, umfassend die folgenden Schritte in einer beliebigen Reihenfolge oder in einer beliebigen Kombination:
a) Vorschieben (21,22) einer ersten Bahn (11) aus einer Grundmaterialschicht (11a; 11b) mit durchgehenden Löchern, Öffnungen oder Schlitzen (20), die jeweils einen Öffnungsbereich definieren, und einer zweiten Bahn (12) aus einer Aluminiummetallfolie (12a; 12b) in Richtung eines Laminierungswalzenspalts,
b) Laminieren (25) der ersten und der zweiten Bahn aufeinander durch Schmelz-Koextrudieren (24) einer geschmolzenen Multischicht aus mindestens einer Bindungszwischenschicht (13a, 14a,b, 16a,b) aus einem thermoplastischen Polymer zusammen mit einem thermomechanisch stabilen Polymer (15a; 15b) zwischen der Bahn aus der Aluminiummetallfolie (12a; 12b) und der Bahn aus der Grundmaterialschicht (11a; 11b), und anschließend Pressen der Schichten, um sie in dem Laminierungswalzenspalt aufeinanderzukleben,
wobei es sich bei der thermomechanisch stabilen Polymerschicht (15a; 15b) um eine Polymerzusammensetzung mit einem Schmelzpunkt von mehr als 150 °C handelt, die zu mindestens 70 Gew.-% ein Polymer umfasst, das ausgewählt ist aus der Gruppe bestehend aus Ethylenvinylalkoholcopolymer (EVOH) und Polyamid (PA), das durch die Polymerisation von Monomeren entsteht, die ausgewählt sind aus der Gruppe bestehend aus Caprolactam-, Laurolactam-, Undecanolactam-, Adipinsäure-, Azelainsäure-, Sebacinsäure-, Dodecandisäure-, Terephthalsäure-, Isophthalsäure-, Butandiamin-, Hexamethylendiamin-, Trimethylhexamethylendiamin- und Metaxyxylendiamin(MXDA)-Monomer, oder aus einer Mischung aus zwei oder mehr Polyamiden, die aus unterschiedlichen Kombinationen derartiger Monomere gewonnen werden, wobei die Menge an MXDA-Monomer, die in dem Polyamid enthalten ist, insgesamt 80 Mol-% oder weniger beträgt,
c) Laminieren (27, 18) einer innersten heißsiegelbaren thermoplastischen Polymerschicht (17a; 17b) auf der inneren Seite der Bahn der Aluminiummetallfolie gegenüber der Seite der Grundmaterialschicht, d) Laminieren einer äußersten thermoplastischen Polymerschicht (19a; 19b) auf der äußeren Seite der Bahn der Grundmaterialschicht gegenüber der Seite der Aluminiummetallfolie,
wodurch die Aluminiummetallfolie, die innerste und die äußerste thermoplastische Polymerschicht und die thermomechanisch stabile Polymerschicht innerhalb der Bereiche der durchgehenden Löcher, Öffnungen oder Schlitze aufeinanderlaminiert werden, um ein laminiertes Öffnungsmembranmaterial (L), das nicht die Grundmaterialschicht enthält, innerhalb der Öffnungsbereiche zu bilden.

## Revendications

1. Matériau d'emballage d'aliment liquide à base de cellulose stratifié (10a ; 10b), comprenant une couche de matériau de base (11a ; 11b) pourvue de trous traversants, d'ouvertures ou de fentes (20), chacun délimitant une zone d'ouverture, comprenant en outre une couche de polymère thermoplastique transparente et protectrice la plus à l'extérieur (19a ; 19b) disposée sur l'extérieur de la couche de matériau de base, à savoir du côté qui doit être orienté vers l'extérieur d'un récipient d'emballage formé à partir du matériau stratifié, et une couche de polymère thermoplastique thermosoudable et étanche aux liquides la plus à l'intérieur (17a ; 17b), qui est destinée à être en contact direct avec le produit alimentaire emballé, une feuille d'aluminium métallique (12a ; 12b) permettant de conférer des propriétés de barrière aux gaz, qui est stratifiée entre la couche de matériau de base et la couche de polymère thermoplastique la plus à l'intérieur, dans lequel une couche de polymère thermo-mécaniquement stable (15a ; 15b) est également stratifiée entre la couche de matériau de base et la couche thermoplastique la plus à l'intérieur, la couche de polymère thermo-mécaniquement stable étant constituée d'une composition de polymère ayant un point de fusion supérieur à 150 °C et comprenant au moins 70 % en poids d'un polymère choisi dans le groupe constitué par un copolymère d'éthylène et d'alcool vinylique (EVOH) et un polyamide (PA) résultant de la polymérisation de monomères choisis dans le groupe constitué par le caprolactame, le laurolactame, l'undécanolactame, l'acide adipique, l'acide azélaïque, l'acide sébacique, l'acide dodécanedioïque, l'acide téréphtalique, l'acide isophtalique, la butanediamine, l'hexaméthylènediamine, la triméthylhexaméthylènediamine et le monomère méta-xylylènediamine (MXDA), ou d'un mélange de deux ou plus de deux polyamides obtenus à partir de différentes combinaisons de tels monomères, la quantité de monomère MXDA inclus dans le polyamide étant au total inférieure ou égale à 80 % en mole, dans lequel la couche thermo-mécaniquement stable (15a ; 15b) est stratifiée entre la feuille d'aluminium métallique (12a ; 12b) et la couche de matériau de base (11a ; 11b), conjointement avec au moins une couche de liaison intermédiaire (13a, 14a,b, 16a,b) constituée d'un polymère thermoplastique et dans lequel la feuille d'aluminium métallique, les couches de polymère thermoplastique la plus à l'intérieur et la plus à l'extérieur et la couche de polymère thermo-mécaniquement stable s'étendent toutes sur toutes les zones des trous, des ouvertures ou des fentes de la couche de matériau de base, de façon telle qu'elles sont stratifiées les unes sur les autres et soudées les unes aux autres pour former un matériau de membrane d'ouverture stratifié, ne contenant pas la couche de matériau de base, à l'intérieur des zones d'ouverture.

2. Matériau d'emballage stratifié tel que revendiqué dans la revendication 1, dans lequel la feuille d'aluminium métallique (12a ; 12b) a une épaisseur inférieure ou égale à 6 µm, telle qu'une épaisseur inférieure ou égale à 5 µm.

3. Matériau d'emballage stratifié tel que revendiqué dans l'une quelconque des revendications 1 et 2, dans lequel la couche thermo-mécaniquement stable (15a ; 15b) est appliquée en une quantité de 0,5 à 10 g/m², telle que de 1 à 6 g/m², telle que de 2 à 4 g/m².

4. Matériau d'emballage stratifié tel que revendiqué dans l'une quelconque des revendications précédentes, dans lequel la couche de matériau de base (11a ; 11b) a un grammage de 100 à 350 g/m².

5. Matériau d'emballage stratifié tel que revendiqué dans l'une quelconque des revendications précédentes, dans lequel la couche de matériau de base (11a) est stratifiée sur la feuille d'aluminium métallique (12a), dans l'ordre suivant, par une première couche de liaison intermédiaire constituée de polyéthylène (13a), qui est amenée à adhérer sur la couche de matériau de base et qui est en contact avec celle-ci, une première couche de polymère adhésif (14a), qui est amenée à adhérer sur le côté opposé de la première couche de liaison intermédiaire constituée de polyéthylène et qui est en contact avec celui-ci, la couche thermo-mécaniquement stable (15a), qui est amenée à adhérer sur le côté opposé de la première couche de polymère adhésif et qui est en contact avec celui-ci, et une seconde couche de polymère adhésif (16a), qui est amenée à adhérer sur le côté opposé de la couche thermo-mécaniquement stable et qui est en contact avec celui-ci et reliant la couche thermo-mécaniquement stable à la feuille d'aluminium métallique.

6. Matériau d'emballage stratifié tel que revendiqué dans la revendication 5, dans lequel le polymère adhésif (14a, 16a) est un polyéthylène modifié par greffage avec de l'anhydride maléique (MAH-g-PE).

7. Matériau d'emballage stratifié tel que revendiqué dans l'une quelconque des revendications 5 ou 6, dans lequel la couche de liaison intermédiaire constituée de polyéthylène (13a) est appliquée en une quantité de 5 à 10 g/m², telle que de 6 à 8 g/m².

8. Matériau de membrane d'ouverture stratifié (L), recouvrant une zone d'ouverture d'un matériau d'emballage stratifié (10a ; 10b), la zone d'ouverture étant délimitée par un trou traversant, une ouverture ou une fente (20) dans une couche de matériau de base (11a ; 11b) comprise dans le matériau d'emballage stratifié, le matériau de membrane stratifié comprenant les couches stratifiées suivantes de l'extérieur du matériau de membrane d'ouverture stratifié vers l'intérieur, à savoir correspondant à l'extérieur et à l'intérieur d'un emballage comprenant le matériau de membrane d'ouverture stratifié, une couche de polymère thermoplastique transparente et protectrice la plus à l'extérieur (19a ; 19b), au moins une couche de liaison intermédiaire (13a, 14a,b, 16a,b) constituée d'un polymère thermoplastique, une couche thermo-mécaniquement stable (15a ; 15b), constituée d'une composition de polymère ayant un point de fusion supérieur à 150 °C et comprenant au moins 70 % en poids d'un polymère choisi dans le groupe constitué par un copolymère d'éthylène et d'alcool vinylique (EVOH) et un polyamide (PA) résultant de la polymérisation de monomères choisis dans le groupe constitué par le caprolactame, le laurolactame, l'undécanolactame, l'acide adipique, l'acide azélaïque, l'acide sébacique, l'acide dodécanedioïque, l'acide téréphtalique, l'acide isophtalique, la butanediamine, l'hexaméthylènediamine, la triméthylhexaméthylènediamine et le monomère *méta-*xylylènediamine (MXDA), ou d'un mélange de deux ou plus de deux polyamides obtenus à partir de différentes combinaisons de tels monomères, la quantité de monomère MXDA inclus dans le polyamide étant au total inférieure ou égale à 80 % en mole, une feuille d'aluminium métallique (12a ; 12b), au moins une couche de polymère adhésif (14a, 16a, 18a ; 14b, 16b, 18b) et une couche de polymère thermoplastique thermosoudable et étanche aux liquides la plus à l'intérieur (17a ; 17b).

9. Matériau de membrane d'ouverture stratifié, tel que revendiqué dans la revendication 8, le matériau de membrane stratifié (L) comprenant la séquence suivante de couches de stratifié, de l'extérieur du matériau de membrane d'ouverture stratifié vers l'intérieur, à savoir la couche de polymère thermoplastique la plus à l'extérieur (19a), une couche de liaison intermédiaire (13a) constituée d'un polymère thermoplastique, une première couche de polymère adhésif (14a), une couche thermo-mécaniquement stable (15a), une seconde couche de polymère adhésif (16a), une feuille d'aluminium métallique (12a) et la couche thermoplastique la plus à l'intérieur (17a).

10. Matériau de membrane d'ouverture stratifié, tel que revendiqué dans la revendication 9, dans lequel la couche de liaison intermédiaire (13a) constituée d'un polymère thermoplastique est un polyéthylène basse densité et les premier et second polymères adhésifs (14a, 16a) sont du polyéthylène modifié par greffage d'anhydride maléique.

11. Récipient d'emballage d'aliment liquide (30a ; 30b ; 30c) comprenant le matériau d'emballage stratifié tel que défini dans l'une quelconque des revendications 1-10.

12. Procédé pour la fabrication du matériau d'emballage d'aliment liquide à base de cellulose stratifié tel que défini dans l'une quelconque des revendications 1-10, comprenant les étapes, dans n'importe quel ordre ou en une quelconque combinaison, consistant à
a) faire avancer (21, 22) une première bande continue (11) d'une couche de matériau de base (11a ; 11b) ayant des trous traversants, des ouvertures ou des fentes (20), chacun délimitant une zone d'ouverture, et une seconde bande continue (12) d'une feuille d'aluminium métallique (12a ; 12b) en direction d'un contact entre des rouleaux de stratification,
b) stratifier (25) les première et seconde bandes continues l'une sur l'autre par coextrusion à l'état fondu (24) d'une multicouche fondue constituée d'au moins une couche de liaison intermédiaire (13a, 14a,b, 16a,b) constituée d'un polymère thermoplastique conjointement avec un polymère thermo-mécaniquement stable (15a ; 15b), entre la bande continue de la feuille d'aluminium métallique (12a ; 12b) et la bande continue de la couche de matériau de base (11a ; 11b), puis presser les couches pour les amener à adhérer les unes aux autres dans le contact entre des rouleaux de stratification, la couche de polymère thermo-mécaniquement stable (15a ; 15b) étant une composition de polymère ayant un point de fusion supérieur à 150 °C, comprenant au moins 70 % en poids d'un polymère choisi dans le groupe constitué par un copolymère d'éthylène et d'alcool vinylique (EVOH) et un polyamide (PA) résultant de la polymérisation de monomères choisis dans le groupe constitué par le caprolactame, le laurolactame, l'undécanolactame, l'acide adipique, l'acide azélaïque, l'acide sébacique, l'acide dodécanedioïque, l'acide téréphtalique, l'acide isophtalique, la butanediamine, l'hexaméthylènediamine, la triméthylhexaméthylènediamine et le monomère *méta-*xylylènediamine (MXDA), ou d'un mélange de deux ou plus de deux polyamides obtenus à partir de différentes combinaisons de tels monomères, la quantité de monomère MXDA inclus dans le polyamide étant au total inférieure ou égale à 80 % en mole,
c) stratifier (27, 18) une couche de polymère thermoplastique thermosoudable la plus à l'intérieur (17a ; 17b) sur le côté intérieur de la bande continue de la feuille d'aluminium métallique, à l'opposé du côté de la couche de matériau de base,
d) stratifier une couche de polymère thermoplastique la plus à l'extérieur (19a ; 19b) sur le côté extérieur de la bande continue de la couche de matériau de base, à l'opposé du côté de la feuille d'aluminium métallique,
ce qui stratifie ainsi la feuille d'aluminium métallique, les couches de polymère thermoplastique la plus à l'intérieur et la plus à l'extérieur et la couche de polymère thermo-mécaniquement stable les unes sur les autres à l'intérieur des zones des trous traversants, des ouvertures ou des fentes, pour former un matériau de membrane d'ouverture stratifié (L), ne contenant pas la couche de matériau de base, à l'intérieur des zones d'ouverture.
